# EUROPEAN PATENT APPLICATION

(11) **EP 4 730 598 A1**
(43) Date of publication of application: **22.04.2026**
(21) Application number: 24879682.3
(22) Date of filing: 11.10.2024
(51) Int. Cl.: H02J 7/02, H01M 10/44, H01M 10/48

(54) **CELL BALANCE ADJUSTMENT METHOD AND CELL BALANCE ADJUSTMENT DEVICE FOR SERIES SECONDARY BATTERY**

(30) Priority: 18.10.2023 JP 2023179338
(71) Applicant: Mazda Imasen Electric Drive Corporation, Higashihiroshima-shi, Hiroshima 739-0146 (JP)
(72) Inventor: YAMANOUE, Kouichi, Higashihiroshima-shi, Hiroshima 739-0146 (JP)
(74) Representative: Germain Maureau
(86) International application number: PCT/JP2024/036535
(87) International publication number: WO 2025/084257

(57) **Abstract**

Disclosed is a cell balance adjustment method of equalizing charge states of cells 2 in a secondary battery 3. All of the cells 2 forming the secondary battery 3 are grouped into a plurality of processing target groups 4, and each processing target group shares a part of the cells 2 with an adjacent processing target group 4. The method includes a capacitor charging step of connecting a capacitor 8 to both end portions of the processing target group 4 and charging the capacitor 8, and a capacitor discharging step of connecting the capacitor to a predetermined processing target cell included in the processing target group 4 and discharging an electric charge of the capacitor 8 to charge the processing target cell.

## Description

### TECHNICAL FIELD

The technique disclosed herein relates to a cell balance adjustment method and a cell balance adjustment device suitable for batteries for driving electric vehicles and the like.

### BACKGROUND ART

A high-voltage (e.g., several hundred volts) driving battery mounted on a hybrid vehicle, an electric vehicle, or the like is generally configured by connecting, in series, a large number of single cells (cells) each made of a lithium ion battery or the like having a voltage of several volts.

Even if the battery is charged or discharged in the same manner, the charge states of the cells will not be the same due to variation among the individual cells. That is, the voltages will differ among the cells. When the battery is charged with such variations in voltages of the cells, the charging needs to be stopped when a cell with the highest voltage becomes fully changed (SOC 100%) in order to avoid overcharging that cell. At this time, the other cells are not yet fully charged. As a result, the actual amount of usable power will be significantly less than that the battery originally has, even after the battery charge.

Therefore, a technique for equalizing the charge state of the cells (cell balance adjustment technique) has been put into practical use so that the amount of original power of the battery can be used. There are generally two types for this technique: a passive method and an active method.

The passive method adjusts the charge amount of each cell to match the charge amount of a cell with the lowest charge amount (minimum charge amount) so that all the cells have the same charge state. That is, power that is equal to or surpassing the minimum charge amount in the other cells is discharged and discarded, and is thereby adjusted to the minimum charge amount so as to equalize the charge state of all the cells. In the passive method, while the circuits and control are simple and can be implemented at a low cost, there is a disadvantage of significant energy loss.

The active method, on the other hand, transfers the power from a cell with a large charge amount to a cell with a smaller charge amount. This way, the charge amounts of the cells are adjusted to an average charge amount, thus equalizing the charge state of all the cells. Therefore, while the energy loss is small in the active method, the circuits and control tend to become complicated. For this reason, the active method has a disadvantage of a high cost and a large size, and has not been put into practical use.

Various types of circuits that perform cell balance adjustment (also referred to as ACB circuits) using such an active method have been proposed, including a half-bridge inductor method and a transformer method. Among these, an ACB circuit (flying capacitor ACB circuit) using a capacitor separable from the circuit (flying capacitor) has fewer disadvantages in terms of cost and size and offers the advantage of relatively simple control.

On the other hand, the flying capacitor ACB circuit has an issue that it takes time to perform an equalization process. More specifically, in the flying capacitor ACB circuit, a flying capacitor is charged using power from a cell with a larger charge amount, and then the power stored in the flying capacitor is used to charge a cell with a smaller charge amount. This way, the charge state of each cell is equalized.

In this power transfer via a capacitor, the voltage difference among the cells decreases as the charge states of the cells become more equalized. This leads to a reduction in the current flowing into the capacitor, resulting in significantly longer time for the voltage to converge. Therefore, the equalization process will take a long time.

Techniques for solving such a problem in the flying capacitor ACB circuit have also been proposed.

For example, Patent Document 1 discloses a charge state adjustment device including one capacitor C (corresponding to the flying capacitor) connected to both a positive electrode side and a negative electrode side of each cell via a switch. This charge state adjustment device equalizes the charge state of each of the cells by connecting a cell group including two or more predetermined cells to the capacitor C to charge the cell group, and then connecting a cell with the smallest charge amount to the capacitor C.

Further, Patent Document 2 discloses a power storage including a plurality of capacitors (corresponding to the flying capacitor) connected to both a positive electrode side and a negative electrode side of each cell via a switch. This power storage equalizes the charge states of the cells by using an active method that equalizes the voltage of the cells through charging/discharging of the capacitor, in combination with a passive method that uses switches for discharging.

### CITATION LIST

### PATENT DOCUMENT

Patent Document 1: Japanese Unexamined Patent Publication No. 2007-43788
Patent Document 2: Japanese Unexamined Patent Publication No. 2015-37339

### SUMMARY OF THE INVENTION

### TECHNICAL PROBLEM

Since the technique of Patent Document 1 charges the capacitor C using the voltages of the plurality of cells, the current flowing in the capacitor C does not decrease even as equalization of the charge states of the cells progresses. Therefore, the time taken for the individual equalization process can be short. However, since the number of the capacitor C is one, the equalization process needs to be repeated and therefore requires a long time to equalize all the cells. In addition, a need for processes, such as a discharge time estimation process, makes the control complex and imposes a significant computational burden.

According to the technique of Patent Document 2, a stable discharge is difficult to achieve due to variations among individual switches. In addition, since the passive method is used in combination, there is still an issue of energy loss.

In view of the above, a technique is disclosed herein in which a switch control method is devised so that the issues can be solved even in a basic flying capacitor ACB circuit.

### SOLUTION TO THE PROBLEM

One of the techniques disclosed herein is a cell balance adjustment method of equalizing charge states of a plurality of cells in a secondary battery configured by connecting the plurality of cells in series.

All of the cells forming the secondary battery are grouped into a plurality of processing target groups, each of the processing target groups including at least two or more of the cells arranged consecutively, each of the processing target groups sharing a part of the cells with an adjacent processing target group.

The cell balance adjustment method includes: a capacitor charging step of connecting a capacitor to both end portions of the processing target group and charging the capacitor; and a capacitor discharging step of connecting the capacitor to a predetermined processing target cell included in the processing target group and discharging an electric charge of the capacitor to charge the processing target cell.

That is, according to this cell balance adjustment method, all of the cells forming the secondary battery are grouped into a plurality of processing target groups, each of the processing target groups including at least two or more of the cells arranged consecutively, and each of the processing target groups shares a part of the cells with an adjacent processing target group.

In this state, a capacitor is connected to both end portions of the processing target group, thereby charging the capacitor. That is, the capacitor is charged with the voltages of all of the plurality of cells included in the processing target group. Then, the capacitor is connected to a predetermined processing target cell included in the processing target group, and an electric charge of the capacitor is discharged to charge the processing target cell. That is, a part of the cells, which is one of the cells included in the processing target group is charged with the discharge from the capacitor with the high electric charge.

This way, the current flowing through the capacitor does not decrease even when equalization of the charge states has progressed: the charging/discharging process can converge in a short time. It is also possible to reduce energy loss since power is transferred between the cells.

Further, since each processing target group shares a part of the cells with another processing target group, the charge states of all the cells forming the secondary battery can be equalized.

The processing target cell is preferably a low-voltage cell having a lowest voltage among the cells in the processing target group.

If it is the case, the cell balance can be adjusted most efficiently.

The processing target group may include two of the cells. In such a case, the capacitor charging step and the capacitor discharging step may be repeated until a magnitude relationship between a voltage of one of the cells, which is a low-voltage side cell corresponding to the low-voltage cell, and a voltage of the other cell, which is a high-voltage side cell, is reversed.

This way, there is no need to detect the voltage of each cell. It is sufficient to be able to compare the voltages of two cells relative to each other, and no sophisticated detectors or calculations are required. It is thus possible to reduce the cost of components and the size of the device.

Further, the capacitor charging step and the capacitor discharging step may be repeated until a difference in voltages of the cells included in each of the processing target groups is a predetermined value or less.

This technique can equalize the charge states of cells if the processing target group includes three or more cells.

The capacitor charging step and the capacitor discharging step may be continuously repeated while the secondary battery is in use. The charge states of the cells can be equalized by this technique as well.

The capacitor charging step and the capacitor discharging step may be repeated alternately at a cycle of 1 kHz or more and 1 MHz or less.

This way, it is possible to make the cell balance adjustment device compact and low-cost, while reducing high-frequency noise.

Another technique disclosed herein is a cell balance adjustment device configured to equalize charge states of a plurality of cells in a secondary battery configured by connecting the plurality of cells in series.

All of the cells forming the secondary battery are grouped into a plurality of processing target groups, each of the processing target groups including at least two or more of the cells arranged consecutively, each of the processing target groups sharing a part of the cells with an adjacent processing target group.

The cell balance adjustment device includes: a plurality of capacitors arranged for each of the processing target groups and connected to a positive electrode side and a negative electrode side of each of the cells via switches; a cell voltage comparing unit capable of comparing voltages of the cells; and a control unit configured to control each of the switches based on a detection value obtained from the cell voltage comparing unit.

The control unit is configured to execute a capacitor charging process of connecting the capacitor to both end portions of each of the processing target groups and charging the capacitor, and a capacitor discharging process of connecting the capacitor to a predetermined processing target cell included in each of the processing target groups and discharging an electric charge of the capacitor to charge the processing target cell.

That is, this cell balance adjustment device executes the cell balance adjustment method described above. It is thus possible to achieve a highly valuable cell balance adjustment device at low-cost and put it into practical use.

### ADVANTAGES OF THE INVENTION

The technique disclosed herein is applicable to a conventional flying capacitor ACB circuit and effectively solves the problems of the circuit by simply changing the method of controlling the switches. As a result, it is possible to obtain only the advantages of the flying capacitor ACB circuit, which has less energy loss, fewer disadvantage in terms of cost and size, and is relatively easy to control. It is thus possible to achieve a highly valuable cell balance adjustment device at low-cost and put it into practical use.

### BRIEF DESCRIPTION OF THE DRAWINGS

FIG. 1 is a diagram for explaining a method of controlling a switch in a conventional flying capacitor ACB circuit (Comparative Example).
FIG. 2 is a diagram for explaining a method of controlling a switch in a flying capacitor ACB circuit to which the technique disclosed herein is applied (Example).
FIG. 3 is a diagram showing a flying capacitor ACB circuit to which the technique disclosed herein is applicable.
FIG. 4 is a block diagram showing a relationship among main components of a cell balance adjustment device.
FIG. 5 is a circuit diagram for reference in explaining an exemplary control by a control unit.
FIG. 6 is a flowchart showing a flow of main processing executed by the control unit.
FIG. 7 is a diagram corresponding to main steps of the processing shown in FIG. 6.
FIG. 8 is a diagram for explaining an effect of the technique disclosed herein.
FIG. 9 is a diagram showing another flying capacitor ACB circuit to which the technique disclosed herein is applicable.
FIG. 10A is a flowchart showing a flow of main processing executed by a second control unit.
FIG. 10B is a flowchart that is continuation of FIG. 10A.
FIG. 11A is a diagram corresponding to main steps of the processing shown in FIG. 10A and FIG. 10B.
FIG. 11B is a diagram that is continuation of FIG. 11A.

### DESCRIPTION OF EMBODIMENT

The technique disclosed herein will be described hereinbelow. The following description is no more than an example in nature.

### <Basic Features of Technique Disclosed Herein>

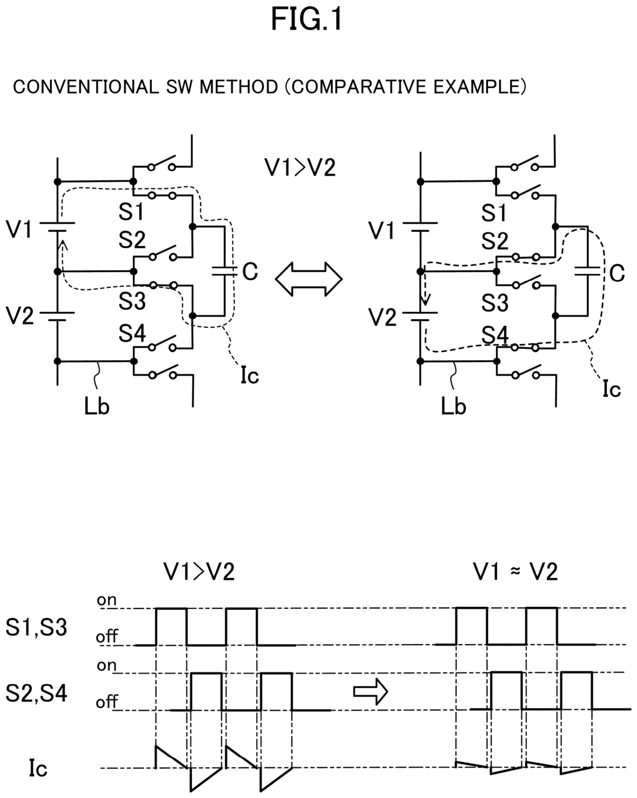

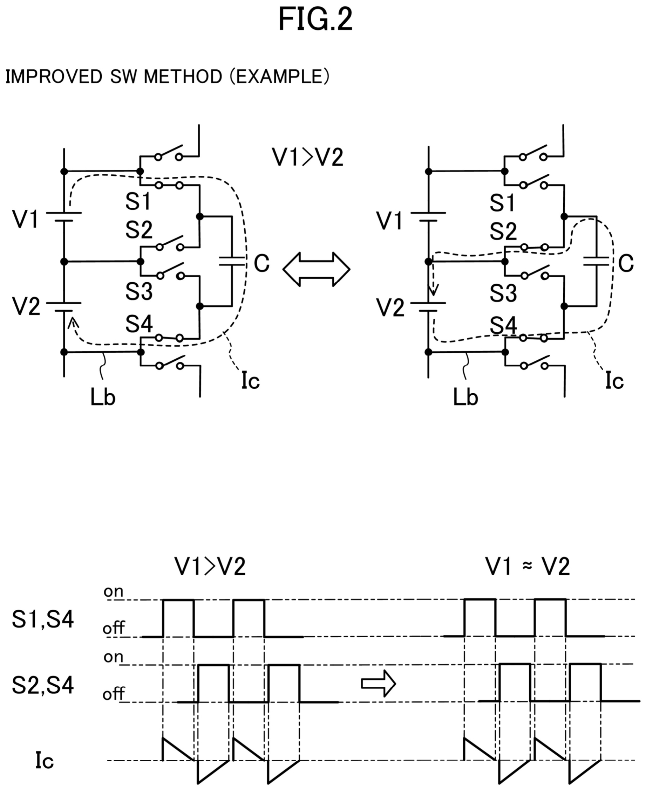

Prior to specific description of the embodiments, basic features of the technique disclosed herein will be described. FIG. 1 illustrates a method of controlling a switch in a conventional flying capacitor ACB circuit (conventional SW method) as a comparative example. FIG. 2 illustrates a method of controlling a switch in a flying capacitor ACB circuit to which the technique disclosed herein is applied (improved SW method).

The circuit shown in the upper part of each figure is a basic part of the flying capacitor ACB circuit (part corresponding to two cells V1 and V2 serially connected). The configuration of the circuits is the same in both the conventional SW method and the improved SW method.

That is, the flying capacitor ACB circuit includes: a plurality of branch lines Lb connected to the positive electrode side and the negative electrode side of each of the cells V1 and V2; a plurality of switches S1 to S4 arranged in each of the branch lines Lb; and a capacitor C (so-called flying capacitor) connected to both the positive electrode side and the negative electrode side of each of the cells V1 and V2 via these switches S1 to S4. Each of the switches S1 to S4 are OFF (not conductive state) in a normal state (so-called "normally open").

A case will be described below on the assumption that the voltage of the cell V1 is higher than that of the cell V2 (V1 > V2). In this case, the conventional SW method turns on the switch S1 and the switch S3 (conductive state) so that the cell V1 with a higher voltage is connected to the capacitor C, as shown in the upper left of FIG. 1. This causes a flow of a current Ic as indicated by the broken line and transfers the electric charge from the cell V1 to the capacitor C, thus charging the capacitor C.

Subsequently, instead of the switch S1 and the switch S3, the switch S2 and the switch S4 are turned on, so that the cell V2 with a lower voltage is connected to the capacitor C, as shown in the upper right of FIG. 1. This causes a flow of the current Ic as indicated by the broken line and transfers the electric charge from the capacitor C to the cell V2, thus charging the cell V2.

The conventional SW method controls the switches S1 to S4 to repeat these operations.

The lower part of each figure shows a time chart corresponding to the operations shown in the upper part. When the voltage of the cell V1 is significantly higher than that of the cell V2 (V1 > V2) as shown in the lower left of FIG. 1, that difference in the voltage is applied to the capacitor C, resulting in a relatively large current IC flowing in the capacitor C. This causes relatively fast progress in equalization of the charge states of both the cells V1 and V2.

Then, the current IC flowing in the capacitor C decreases with a decrease in the difference in the voltage between the cell V2 and the cell V1 (V1 ≈ V2) as shown in the lower right of FIG. 1. Since the difference between the charge states of both the cells V1 and V2 decreases as the equalization progresses, the equalization of the charge states of both the cells V1 and V2 slows down. Theoretically, the voltages of both the cells V1 and V2 will not be exactly the same but converge exponentially. The conventional SW method therefore requires a long time for equalization of the charge states.

In contrast, the improved SW method turns on the switch S1 and the switch S4 so that both the cells V1 and V2 are connected to the capacitor C, as shown in the upper left of FIG. 2. This causes a flow of a current Ic as indicated by the broken line and transfers the electric charge from the cell V1 and the cell V2 to the capacitor C, thus charging the capacitor C.

Subsequently, instead of the switch S1 and the switch S4, the switch S2 and the switch S4 are turned on, so that the cell V2 with a lower voltage is connected to the capacitor C, as shown in the upper right of FIG. 2. This causes a flow of the current Ic as indicated by the broken line and transfers the electric charge from the capacitor C to the cell V2, thus charging the cell V2.

The improved SW method controls the switches S1 to S4 to repeat these operations.

When the voltage of the cell V1 is significantly higher than that of the cell V2 (V1 > V2) as shown in the lower left of FIG. 2, the total voltage of both the cells V1 and V2 is applied to the capacitor C, resulting in a relatively large current IC flowing in the capacitor C, irrespective of the difference in voltage. This causes relatively fast progress in equalization of the charge states of both the cells V1 and V2.

Even when the voltage difference between the cell V2 and the cell V1 becomes smaller (V1 ≈ V2), as shown in the lower right of FIG. 2, the total voltage of both the cells V1 and V2 (approximately twice the voltage applied in the conventional SW method) is applied to the capacitor C similarly to the above case. Thus, a large current Ic flowing through the capacitor C is maintained. Since the current Ic does not decrease even when the equalization of the charge states of both the cells V1 and V2 progresses, the equalization of the charge states of both the cells V1 and V2 is expedited. Thus, according to the improved SW method, the equalization process of the charge states can be executed in a shorter time.

### <First Embodiment of Technique Disclosed Herein>

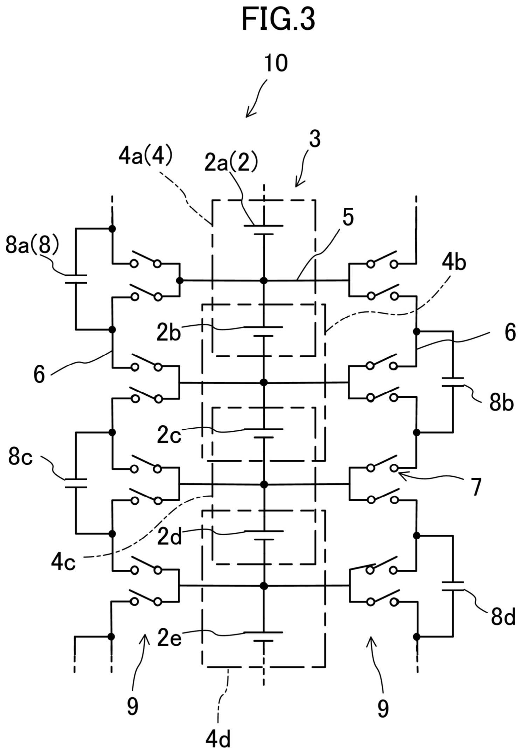

FIG. 3 shows a flying capacitor ACB circuit (first circuit 10) to which the technique disclosed herein is applicable. The technique disclosed herein is applicable to any flying capacitor ACB circuit, and the first circuit 10 is one example of such a circuit.

A vehicle that can be driven by electricity, such as hybrid vehicles and electric vehicles, is equipped with a high-voltage battery 3 (secondary battery), which is composed of multiple cells 2 connected in series, as shown in FIG. 3. FIG. 3 shows a part of the battery 3 (five cells 2, from first cell 2a to fifth cell 2e). The same configuration applies to all the cells 2 in the first circuit 10. Therefore, the remaining parts are not illustrated.

The battery 3 is equipped with a controller (not shown) dedicated to controlling its power. The first circuit 10 is integrated into such a controller to equalize the charge states of the cells 2. Specifically, most of the cell balance adjustment device 1 of the present embodiment is configured as a single semiconductor chip including the first circuit 10 and can be mounted on the controller's substrate for use.

The cells 2 forming the battery 3 are grouped into a plurality of groups (processing target groups 4) each including at least two (two in this case) consecutive cells 2. In FIG. 3, the cells 2 are grouped into a first processing target group 4a, a second processing target group 4b, a third processing target group 4c, and a fourth processing target group 4d.

Each processing target group 4 shares a part of its cells 2 (one cell 2 in this case) with an adjacent processing target group 4. For example, the first processing target group 4a shares the second cell 2b with the second processing target group 4b. The second processing target group 4b shares the third cell 2c with the third processing target group 4c. The third processing target group 4c shares the fourth cell 2d with the fourth processing target group 4d.

For such a battery 3, the first circuit 10 includes a plurality of branch lines 5, a plurality of connecting lines 6, a plurality of switches 7, a plurality of capacitors 8, etc. Conceptually, these members are arranged along the series of the cells 2 as shown in FIG. 3. The following description of the first circuit 10 will be based on FIG. 3, for convenience.

One end of each branch line 5 is connected to a portion between the positive electrode side of one cell 2 and the negative electrode side of the other cell 2 connected in series. The other end of each branch line 5 is branched into two and connected to one end of each of two switches 7, 7.

When focusing on one cell 2, the other end of the switch 7 connected to the positive electrode side of the cell 2 via a branch line 5 and the other end of the switch 7 connected to the negative electrode side of the cell 2 via another branch line 5 are connected to each other by the connecting line 6. A circuit having such a configuration is arranged repeatedly along the series of cells 2, forming a series of consecutive circuits 9.

Two such consecutive circuits 9 are arranged symmetrically with respect to the series of the cells 2. The capacitor 8 is connected between two adjacent connecting lines 6, 6 in both the series of the consecutive circuits 9 so that the capacitors 8 alternate with each other. That is, each processing target group 4 includes a single capacitor 8.

For example, in the consecutive circuits 9 on one side (left side), a capacitor 8 (first capacitor 8a) is connected between the connecting line 6 associated with the first cell 2a and the connecting line 6 associated with the second cell 2b. Similarly, a capacitor 8 (third capacitor 8c) is connected between the connecting line 6 associated with the third cell 2c and the connecting line 6 associated with the fourth cell 2d.

In the consecutive circuits 9 on the other side (right side), a capacitor 8 (second capacitor 8b) is connected between the connecting line 6 associated with the second cell 2b and the connecting line 6 associated with the third cell 2c. Similarly, a capacitor 8 (fourth capacitor 8d) is connected between the connecting line 6 associated with the fourth cell 2d and the connecting line 6 associated with the fifth cell 2e.

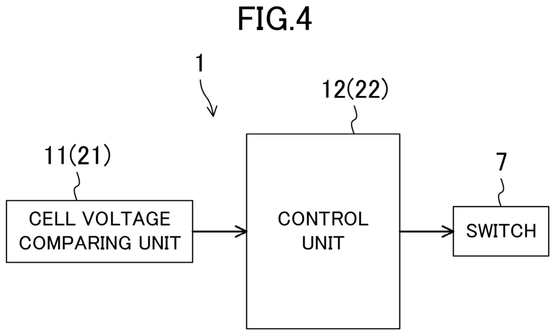

The cell balance adjustment device 1 includes a cell voltage comparing unit 11 and a control unit 12, along with the first circuit 10. FIG. 4 is a block diagram showing a relationship among these main components of the cell balance adjustment device 1.

The cell voltage comparing unit 11 is a unit capable of comparing voltages of each of the cells 2. For example, a conventional controller is generally equipped with a voltage monitoring device to monitor voltage anomalies in each cell 2. The voltage monitoring device is equipped with a mechanism that detects the voltages of individual cells 2 with high accuracy. Therefore, by using that mechanism, the voltages (absolute values) of the individual cells 2 can be obtained and the magnitudes of the voltages of the cells 2 can be compared. In this case, the cell voltage comparing unit 11 can be configured by using an existing controller.

Detection of the voltage of each cell 2 is not necessarily required if there is no voltage monitoring device. The cell voltage comparing unit 11 only needs to be able to compare the relative relationship between magnitudes of the voltages of the cells 2. Therefore, a highly accurate voltage detection mechanism is not required, and the cell voltage comparing unit 11 can be configured by a simple circuit. For example, the cell voltage comparing unit 11 may be a comparator or the like.

That is, most of the control unit 12 can be configured by a predetermined circuit, including the first circuit 10 and the cell voltage comparing unit 11 described above, using a resistor, a comparator, a capacitor, and the like. Therefore, by integrating this circuit into a chip, the cell balance adjustment device 1 can be miniaturized and more easily integrated into the controller. The control unit 12 is configured to control each of the switches 7 via a predetermined operation based on a detected value of the cell voltage comparing unit 11.

### (Exemplary Control by Control Unit)

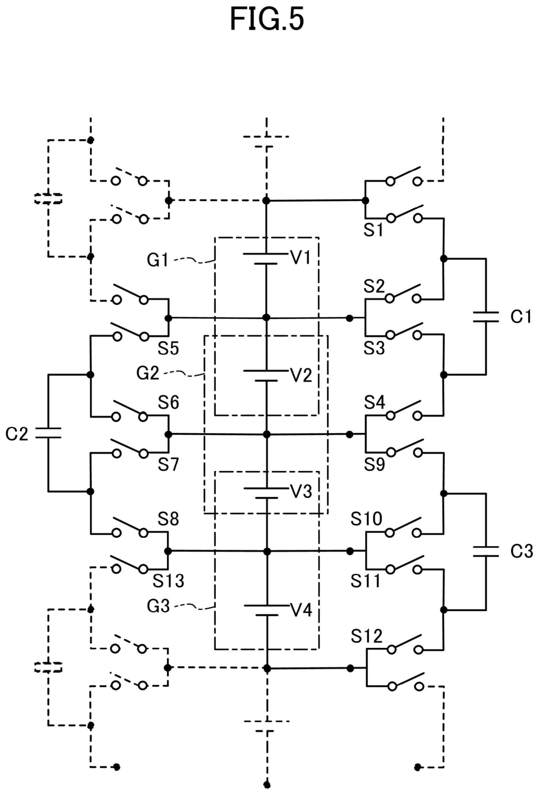

Next, with reference to FIG. 5 to FIG. 7, a specific exemplary control executed for the above first circuit 10 by the control unit 12 to equalize the charge states of the cells 2 of the battery 3 will be described.

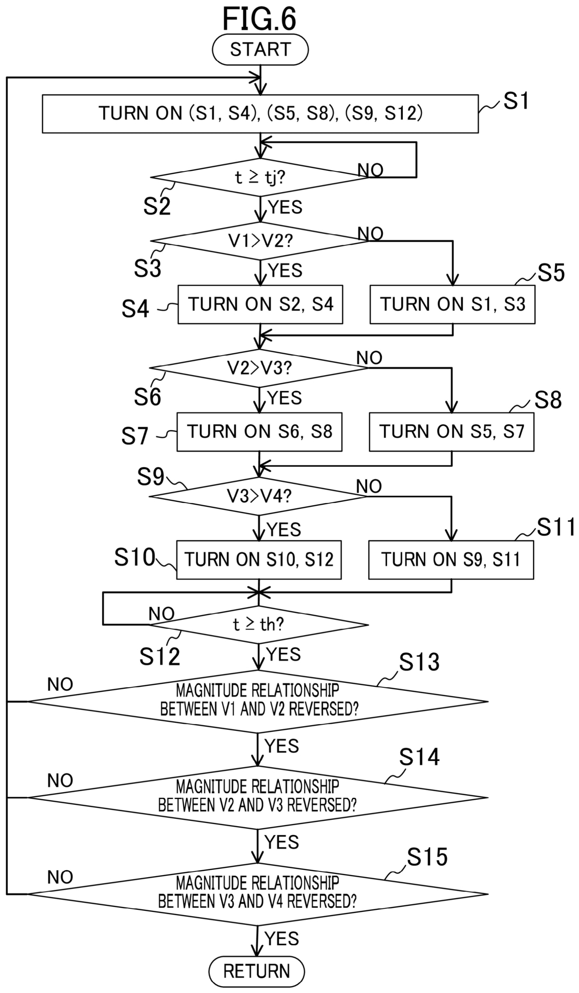

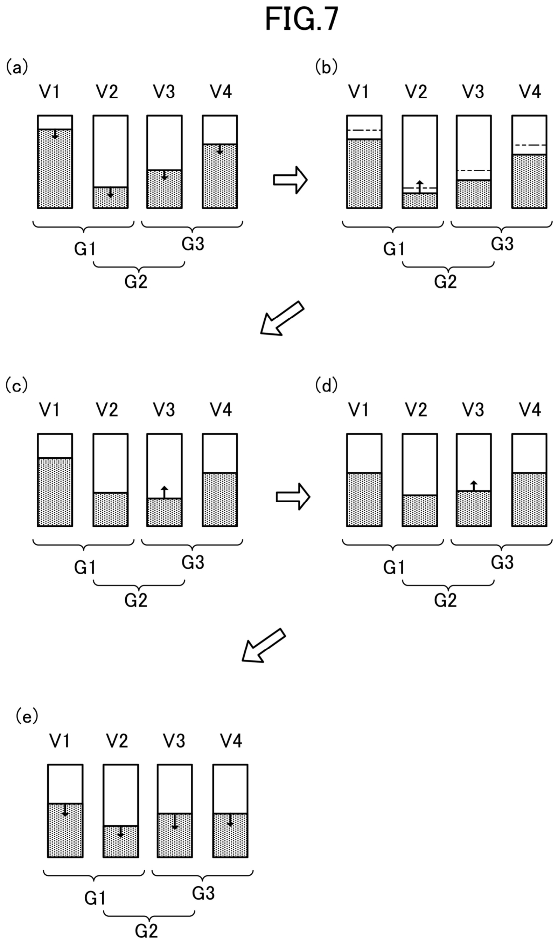

FIG. 5 shows the first circuit 10. In FIG. 5, for the sake of explanation, reference characters are used instead of the reference numbers to distinguish among the cells 2, the switches 7, the capacitors 8, and the processing target groups 4. FIG. 6 is a flowchart showing a flow of main processing executed by the control unit 12. FIG. 7 is a diagram for explaining the charge state of each cell corresponding to main steps of the processing.

The (a) of FIG. 7 shows the initial charge state of each cell. In this exemplary control, the initial charge states of the cells are the first cell V1 > the fourth cell V4 > the third cell V3 > the second cell V2.

As shown in FIG. 6, the control unit 12 first turns on the switches S1, S4, S5, S8, S9, and S12 (step S1). This way, in the first processing target group G1, the first cell V1 and the second cell V2 are connected to the first capacitor C1 via the switches S1 and S4 (corresponding to both end portions of the first processing target group G1). In the second processing target group G2, the second cell V2 and the third cell V3 are connected to the second capacitor C2 via the switches S5 and S8. In the third processing target group G3, the third cell V3 and the fourth cell V4 are connected to the third capacitor C3 via the switches S9 and S12.

This transfers the electric charge from the first cell V1 and the second cell V2 to the first capacitor C1, thus charging the first capacitor C1. Similarly, the electric charge is transferred from the second cell V2 and the third cell V3 to the second capacitor C2, thus charging the second capacitor C2. The electric charge is transferred from the third cell V3 and the fourth cell V4 to the third capacitor C3, thus charging the third capacitor C3. As a result, the charge amount of each cell decreases according to its discharge state, as indicated by arrows in the (a) of FIG. 7.

At this time, the total voltage of the two cells of each processing target group is applied to the capacitor, as described above. This maintains a high current flowing through each capacitor regardless of the charge states of the cells, and charging/discharging converges in a short time. Considering the time required for this convergence in advance, a predetermined capacitor charge time tj (e.g., 50 µs) which is longer than the time required is set in the control unit 12. The control unit 12 determines whether the capacitor charge time tj has elapsed (step S2).

When the capacitor charge time tj is determined to have elapsed, the control unit 12 compares the magnitudes of the voltages of the first cell V1 and the second cell V2 based on information from the cell voltage comparing unit 11 (step S3). If the voltage of the first cell V1 is higher than that of the second cell V2 as a result of comparison (the first cell V1 corresponds to a high-voltage side cell, and the second cell V2 corresponds to a low-voltage side cell, the same applies hereinafter), the switch S2 and the switch S4 are turned on (step S4) to connect the first capacitor C1 with the second cell V2. If the voltage of the second cell V2 is higher than that of the first cell V1, the switch S1 and the switch S3 are turned on (step S5) to connect the first capacitor C1 with the first cell V1.

Subsequently, the control unit 12 compares the magnitudes of the voltages of the second cell V2 and the third cell V3 in a similar manner (step S6). If the voltage of the second cell V2 is higher than that of the third cell V3 as a result of comparison, the switch S6 and the switch S8 are turned on (step S7) to connect the second capacitor C2 with the third cell V3. If the voltage of the third cell V3 is higher than that of the second cell V2, the switch S5 and the switch S7 are turned on (step S8) to connect the second capacitor C2 with the second cell V2.

Further, the control unit 12 also compares the magnitudes of the voltages of the third cell V3 and the fourth cell V4 in a similar manner (step S9). If the voltage of the third cell V3 is higher than that of the fourth cell V4 as a result of comparison, the switch S10 and the switch S12 are turned on (step S10) to connect the third capacitor C3 with the fourth cell V4. If the voltage of the fourth cell V4 is higher than that of the third cell V3, the switch S9 and the switch S11 are turned on (step S11) to connect the third capacitor C3 with the third cell V3.

In this exemplary control, the voltage of the first cell V1 is higher than that of the second cell V2 as shown in the (b) of FIG. 7, and therefore, the first capacitor C1 is connected with the second cell V2 (step S4). This transfers the electric charge from the first capacitor C1 to the second cell V2, as indicated by the arrow in the (b) of FIG. 7, thus charging the second cell V2.

Here, a cell with a relatively low voltage corresponds to a "processing target cell." Accordingly, the second cell V2 corresponds to the processing target cell in this case.

Similarly, the voltage of the second cell V2 is higher than that of the third cell V3 as shown in the (c) of FIG. 7, and therefore, the second capacitor C2 is connected with the third cell V3 (corresponding to the processing target cell) (step S7). This transfers the electric charge from the second capacitor C2 to the third cell V3, as indicated by the arrow in the (c) of FIG. 7, thus charging the third cell V3.

Further, the voltage of the fourth cell V4 is higher than that of the third cell V3 as shown in the (d) of FIG. 7, and therefore, the third capacitor C3 is connected with the third cell V3 (corresponding to the processing target cell) (step S11). This transfers the electric charge from the third capacitor C3 to the third cell V3, as indicated by the arrow in the (d) of FIG. 7, thus charging the third cell V3.

Considering the time required for the convergence of the capacitor's discharge in advance, a predetermined capacitor discharge time th (e.g., 50 µs) which is longer than the time required is set in the control unit 12. The control unit 12 determines whether the capacitor discharge time th has elapsed (step S12).

When the capacitor discharge time th is determined to have elapsed, the control unit 12 determines whether the magnitude relationship of the voltages of the first cell V1 and the second cell V2 has been reversed (step S13). For example, in this exemplary control in which the voltage of the first cell V1 is higher than that of the second cell V2 before the process, whether the voltage of the second cell V2 has become that of the first cell V1 or higher is determined (this substantially corresponds to determination of whether the voltages are generally equalized).

When the magnitude relationship of the voltages of the first cell V1 and the second cell V2 is determined to be reversed as a result, the control unit 12 further determines whether the magnitude relationship of the voltages of the second cell V2 and the third cell V3 has been reversed (step S14). For example, in this exemplary control in which the voltage of the third cell V3 is higher than that of the second cell V2 before the process, whether the voltage of the second cell V2 has become that of the third cell V3 or higher is determined.

When the magnitude relationship of the voltages of the second cell V2 and the third cell V3 is determined to be reversed as a result, the control unit 12 further determines whether the magnitude relationship of the voltages of the third cell V3 and the fourth cell V4 has been reversed (step S15). For example, in this exemplary control in which the voltage of the fourth cell V4 is higher than that of the third cell V3 before the process, whether the voltage of the third cell V3 has become that of the fourth cell V4 or higher is determined.

When it is determined that the magnitude relationship of the voltages of the first cell V1 and the second cell V2 has not been reversed (No in step S13), when it is determined that the magnitude relationship of the voltages of the second cell V2 and the third cell V3 has not been reversed (No in step S14), and when it is determined that the magnitude relationship of the voltages of the third cell V3 and the fourth cell V4 has not been reversed (No in step S15), the process returns to step S1 again and the series of steps is repeated. That is, the series of steps is repeated until the magnitude relationships of the voltages of the cells are reversed in all the processing target groups.

In this exemplary control, the magnitude relationship of the cell voltages has reversed in the second processing target group G2, whereas the magnitude relationship of the cell voltages has not reversed in the other processing target groups. Therefore, the process is executed from step S1 again. Specifically, the process is executed, starting from the capacitor charging process, as shown in the (e) of FIG. 7.

Since each processing target group shares a part of the cells with another processing target group, the charge states of the first cell V1 to the fourth cell V4 are more equalized as compared to the initial state. The repetition of such processing causes further equalization of the charge states of the first cell V1 to the fourth cell V4. In this way, a series of steps are repeated until the magnitude relationships of the cell voltages are reversed in all the processing target groups of the battery 3; the charge states of all the cells forming the battery 3 are thereby equalized in a short time.

The step S1 and the step S2 described herein correspond to a capacitor charging step in the cell balance adjustment method and also correspond to the capacitor charging process of the cell balance adjustment device 1. The step S3 to the step S12 described herein correspond to a capacitor discharging step in the cell balance adjustment method and also correspond to the capacitor discharging process of the cell balance adjustment device 1.

Further, the sequence of the sets of steps, i.e., the steps S3 to S5, the steps S6 to S8, and the steps S9 to S11, is not limited to this sequence and may be any sequence. Similarly, the sequence of the steps S13, S14, and S15 is not limited to this sequence and may be any sequence.

It is preferable that the step S1 and the step S2 (the capacitor charging step or the capacitor charging process) and the step S3 to the step S12 (the capacitor discharging step or the capacitor discharging process) are repeated alternately at a cycle of 1 kHz or more and 1 MHz or less.

Larger capacitance of the capacitor decreases the number of times of the charge and discharge processes, but it increases the size and component costs of the device. Therefore, making the capacitance of the capacitor small and increasing the number of times of the charge and discharge processes are advantageous in terms of cost and size. However, an increase in the number of times of the charge and discharge processes generates high-frequency noise.

The inventor of the present application has studied and found that repeating the charge process and the discharge process alternately at a cycle of 1 kHz or more and 1 MHz or less is most preferable. By repeating the charge process and the discharge process alternately at the above-described cycle, it is possible to make the cell balance adjustment device 1 compact and low-cost, while reducing the high-frequency noise.

### <Effects of Technique Disclosed Herein>

A test was conducted to verify the effects of the improved SW method. In the verification test, instead of lithium ion batteries, capacitors were used as cells (alternative cells), and six alternative cells were connected in series to form a simulated battery. An experimental machine including the first circuit 10 described above was incorporated into the simulated battery, and control similar to the exemplary control described above was executed.

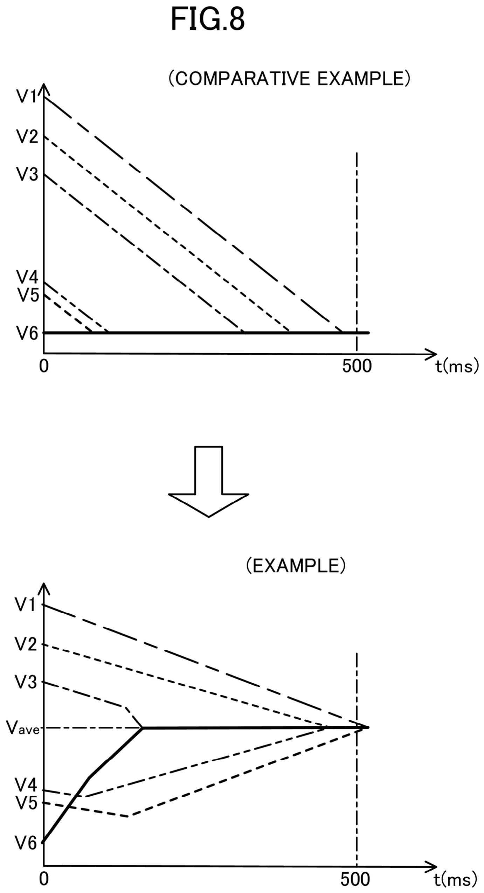

FIG. 8 shows the results of the verification test. The lower part of FIG. 8 shows the verification result of the improved SW method (Example). The upper part of FIG. 8 shows the result when the cell balance adjustment by the passive method is executed using the same experimental machine (Comparative Example). The vertical axis represents the voltage (V) of the cells, and the horizontal axis represents the elapsed time (ms). The magnitude relationship of the voltages of the cells V1 to V6 before the processing is V1 > V2 > V3 > V4 > V5 > V6.

As shown in the upper part of FIG. 8, according to the cell balance adjustment by the passive method, the cells V1 to V5 are discharged to match the voltage of the cell V6 having the lowest voltage. As a result, a loss of 54 mW occurred in this test, but the equalization of the charge states of the cells completed in approximately 500 ms.

On the other hand, the improved SW method is based on the cell balance adjustment by the active method; therefore, charging/discharging is performed in each cell so as to converge at a substantially average value, as shown in the lower part of FIG. 8. As a result, a loss of 2 mW occurred in this test, and the equalization of the charge states of the cells completed in approximately 500 ms. The approximately 500 ms is a value obtained from alternative cells whose capacities are very small, while in actual cells, approximately 5 hours, for example, are required.

As described, the improved SW method allows completion of the processing in a short time equivalent to the time in the cell balance adjustment by the passive method and enables a significant reduction in energy loss.

### <Second Embodiment of Technique Disclosed Herein>

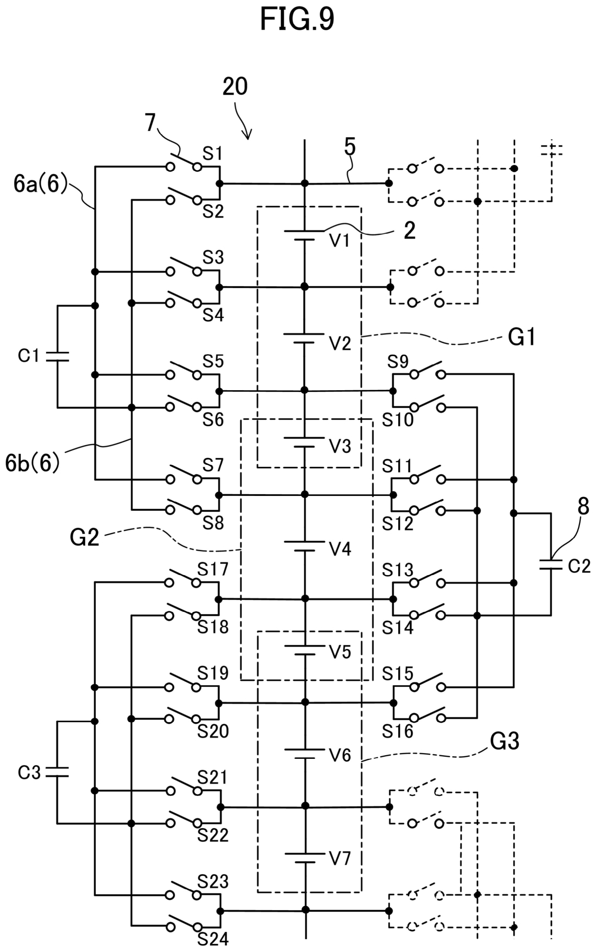

FIG. 9 shows a flying capacitor ACB circuit (second circuit 20) to which the technique disclosed herein is applicable. The second circuit 20 is different from the first circuit 10 in that the processing target group is configured by three cells 2.

Specifically, a first cell V1 to a third cell V3 form a first processing target group G1; the third cell V3 to a fifth cell V5 form a second processing target group G2; and the fifth cell V5 to a seventh cell V7 form a third processing target group G3.

The second circuit 20 also includes a plurality of branch lines 5, a plurality of connecting lines 6, a plurality of switches 7, a plurality of capacitors 8, etc. Conceptually, these members are arranged so as to extend along the series of the cells 2 as shown in FIG. 9. The following description of the second circuit 20 will be based on FIG. 9, for convenience.

The configurations of the branch lines 5 and the switches 7 in the second circuit 20 are the same as those in the first circuit 10. The configurations of the connecting lines 6 and the capacitors 8 in the second circuit 20 are different from those in the first circuit 10. That is, the connecting lines 6 of the second circuit 20 include a first connecting line 6a and a second connecting line 6b. The capacitor 8 is connected between the first connecting line 6a and the second connecting line 6b.

Specifically, when focusing on one processing target group 4, one of the two switches 7 and 7 connected to either the positive electrode side or the negative electrode side of each cell 2 in the processing target group 4 via a branch line 5 is connected to the first connecting line 6a, while the other is connected to the second connecting line 6b.

For example, in the first processing target group G1, the first, third, fifth, and seventh switches S1, S3, S5, and S7 are connected to the first connecting line 6a, while the second, fourth, sixth, and eighth switches S2, S4, S6, and S8 are connected to the second connecting line 6b. Between the first connecting line 6a and the second connecting line 6b, a first capacitor C1 is connected.

The cell balance adjustment device 1 in the second embodiment also includes a second cell voltage comparing unit 21 and a second control unit 22, along with the second circuit 20. The configuration of this cell balance adjustment device 1 is the same as the first embodiment, except that the cell voltage comparing unit 11 and the control unit 12 in FIG. 3 are replaced with the second cell voltage comparing unit 21 and the second control unit 22. Therefore, the reference characters in FIG. 3 are indicated in parentheses, and explanations for these components are omitted.

Further, most of the second control unit 22 is configured by a predetermined circuit comprising a resistor, a comparator, a capacitor, and the like integrated into a chip, and includes the second circuit 20 and the second cell voltage comparing unit 21 described above. The second control unit 22 is configured to control each of the switches 7 via a predetermined operation based on a detected value of the second cell voltage comparing unit 21.

### (Exemplary Control by Second Control Unit)

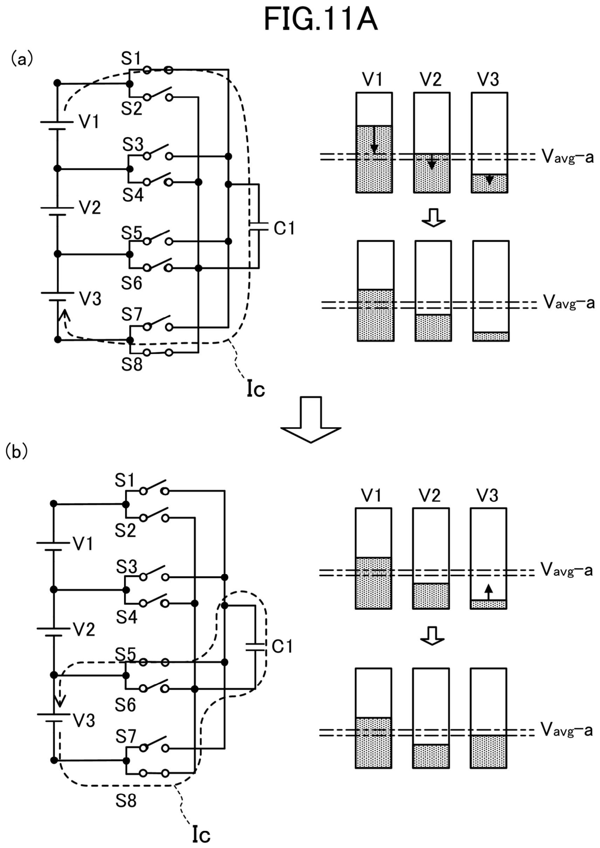

Next, with reference to FIG. 9 to FIG. 11B, a specific exemplary control executed for the above second circuit 20 by the second control unit 22 to equalize the charge states of the cells 2 of the battery 3 will be described. FIG. 9 shows the second circuit 20 referred to in the description.

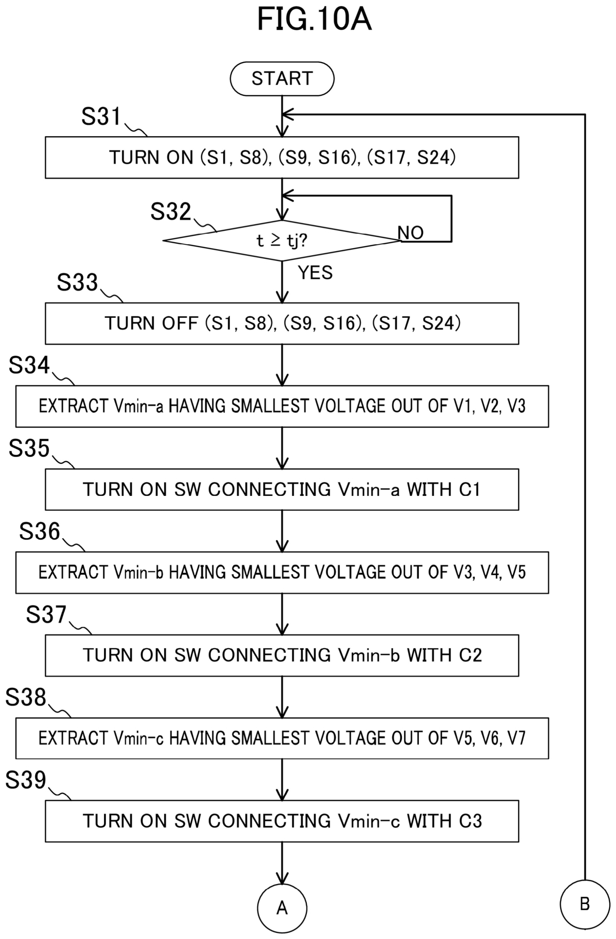

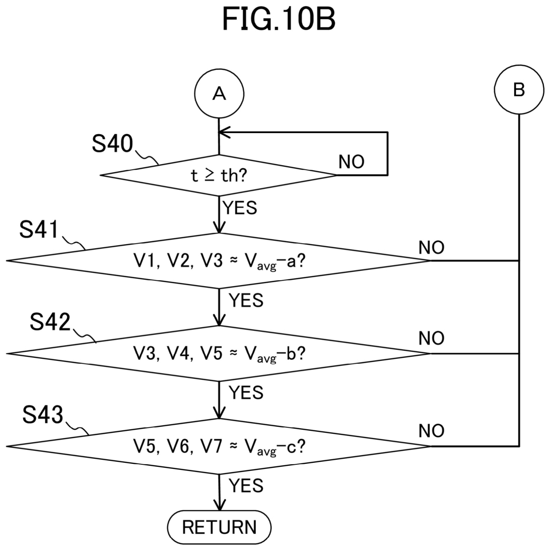

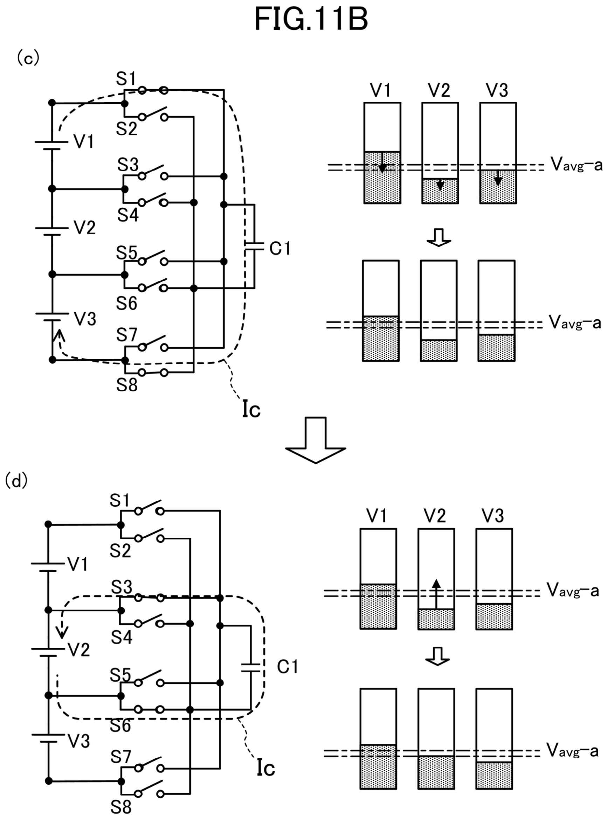

FIG. 10A and FIG. 10B are each a flowchart showing a flow of main processing executed by the second control unit 22. FIG. 11A and FIG. 11B are diagrams explaining the states of the second circuit 20 and the charge state of each cell corresponding to the main steps of the processing in relation to the first processing target group G1.

The (a) of FIG. 11A shows the initial charge state of each cell in the first processing target group G1. In this exemplary control, the initial charge states of the cells are the first cell V1 > the second cell V2 > the third cell V3.

As shown in FIG. 10A, the second control unit 22 first turns on the switches S1, S8, S9, S16, S17, and S24 (step S31). This way, in the first processing target group G1, the first cell V1, the second cell V2, and the third cell V3 are connected to the first capacitor C1 via the switches S1 and S8. In the second processing target group G2, the third cell V3, the fourth cell V4, and the fifth cell V5 are connected to the second capacitor C2 via the switches S9 and S16. In the third processing target group G3, the fifth cell V5, the sixth cell V6, and the seventh cell V7 are connected to the third capacitor C3 via the switches S17 and S24.

As a result, in the first processing target group G1, the current Ic flows as shown by the arrow in broken line in the left part of the (a) of FIG. 11A, transferring the electric charge from the first cell V1 through the third cell V3 to the first capacitor C1, thus charging the first capacitor C1. Similarly, in the second processing target group G2, the electric charge is transferred from the third cell V3 through the fifth cell V5 to the second capacitor C2, thus charging the second capacitor C2. Similarly, in the third processing target group G3, the electric charge is transferred from the fifth cell V5 through the seventh cell V7 to the third capacitor C3, thus charging the third capacitor C3.

As a result, in the first processing target group G1, the charge amount of each cell decreases according to its discharge state, as shown in the right part of the (a) of FIG. 11A. Similarly, in the other processing target groups, the charge amount of each cell decreases according to its discharge state.

At this time, the total voltage of the three cells of each processing target group is applied to the capacitor. This maintains a high current Ic flowing through each capacitor regardless of the charge states of the cells, and charging/discharging converges in a short time. Considering the time required for this convergence in advance, a predetermined capacitor charge time tj (e.g., 50 µs) which is longer than the time required is set in the second control unit 22. The second control unit 22 determines whether the capacitor charge time tj has elapsed (step S32).

When the capacitor charge time tj is determined to have elapsed, the second control unit 22 turns off the switches S1, S8, S9, S16, S17, and S24 (step S33). Then, the second control unit 22 compares the magnitudes of the voltages of the cells in each processing target group based on information from the second cell voltage comparing unit 21 to extract a processing target cell.

At this time, any cell that has a relatively low voltage in the processing target group can be a processing target cell. However, it is preferable to extract a cell that has the lowest voltage (low-voltage cell) as the processing target cell. If it is the case, the cell balance can be adjusted most efficiently.

For example, in the first processing target group G1, the third cell V3 has the lowest voltage; therefore, the third cell V3 is extracted as the processing target cell Vmin-a (step S34). Then, the switch S5 and the switch S8 are turned on (step S35) to connect the first capacitor C1 with the third cell V3, as shown in the left part of the (b) of FIG. 11A.

As a result, the current Ic flows as shown by the arrow in broken line in the left part of the (b) of FIG. 11A, transferring the electric charge from the first capacitor C1 to the third cell V3, thus charging the third cell V3. As a result, the voltage of the third cell V3 increases, as shown in the right part of the (b) of FIG. 11A.

Similarly in the second processing target group G2, a cell having the lowest voltage among the third cell V3 to the fifth cell V5 is extracted as a processing target cell Vmin-b, and the switch connecting this processing target cell Vmin-b with the second capacitor C2 is turned on (step S36, step S37).

Further, similarly in the third processing target group G3, a cell having the lowest voltage among the fifth cell V5 to the seventh cell V7 is extracted as a processing target cell Vmin-c, and the switch connecting this processing target cell Vmin-c with the third capacitor C3 is turned on (step S38, step S39).

Considering the time required for the convergence of the capacitor's discharge in advance, a predetermined capacitor discharge time th (e.g., 50 µs) which is longer than the time required is set in the second control unit 22 as well. As shown in FIG. 10B, the second control unit 22 determines whether the capacitor discharge time th has elapsed (step S40).

The second control unit 22 has a function to estimate the average value Vavg of the voltages of the cells in the processing target group before the processing, based on information from the second cell voltage comparing unit 21, and to store that average value V_{avg}. Then, the second control unit 22 compares the voltage of each cell with the average value Vavg so that the voltage of each cell falls within a predetermined range including the average value Vavg.

Specifically, for the first processing target group G1, the second control unit 22 determines whether the voltages of the first cell V1, the second cell V2, and the third cell V3 have reached the values around the average value Vavg-a (step S41). Similarly, for the second processing target group G2, the second control unit 22 determines whether the voltages of the third cell V3, the fourth cell V4, and the fifth cell V5 have reached the values around the average value Vavg-b (step S42). Similarly, for the third processing target group G3, the second control unit 22 determines whether the voltages of the fifth cell V5, the sixth cell V6, and the seventh cell V7 have reached the values around the average value Vavg-c (step S43).

The processing described herein only needs to determine that the difference in the voltages among all the cells in each processing target group is a predetermined value or less. Accordingly, as in the exemplary control of the first Example, the determination as to whether the magnitude relationship between any two cells in each processing target group is reversed may be repeatedly for all the cells, so that the voltage difference between the two cells is a predetermined value or less with respect to all the cells.

Unless it is determined for all the processing target groups that the voltages of the cells included in each processing target group have reached the values around the average value Vavg, the second control unit 22 returns to step S31 and repeats the series of steps. That is, the series of steps is repeated for all the processing target groups, until the voltages of the cells included in each processing target group reach the values around the average value Vavg.

For example, in the first processing target group G1, the first cell V1 and the second cell V2 are not around Vavg-a, as shown in the right part of the (b) in FIG. 11A. Therefore, the second control unit 22 executes the series of steps again from step S1 (No in step S41).

Specifically, as shown in the left part of the (c) of FIG. 11B, the first cell V1, the second cell V2, and the third cell V3 are connected to the first capacitor C1 via the switches S1 and S8, thus charging the first capacitor C1. As a result, the charge amount of each cell decreases according to its discharge state, as shown in the right part of the (c) of FIG. 11B.

After elapse of the capacitor charge time tj, the second control unit 22 turns off the switches S1, S8, and the like (step S33) and extracts the processing target cell. Since the second cell V2 has the lowest voltage in this case, the second cell V2 is extracted as the processing target cell Vmin-a (step S34).

As shown in the left part of the (d) of FIG. 11B, the switch S3 and the switch S6 are turned on (step S35) to connect the first capacitor C1 with the second cell V2. The voltage of the second cell V2 therefore increases, as shown in the right part of the same figure. As a result, the charge states of the first cell V1 to the third cell V3 in the first processing target group G1 are more equalized as compared to the initial state. The repetition of such processing makes the voltages of the first cell V1 to the third cell V3 close to values around the Vavg-a.

Since each processing target group shares a part of its cells with another processing target group, the average values Vavg of the voltages of the plurality of cells in the processing target groups eventually converge to a certain value, and become the same value. Therefore, by repeating this process in all the processing target groups of the battery 3, the charge states of all the cells forming the battery 3 can be equalized in a short time.

The step S31 and the step S32 described herein correspond to the capacitor charging step in the cell balance adjustment method and also correspond to the capacitor charging process of the cell balance adjustment device 1. The step S34 to the step S40 described herein correspond to the capacitor discharging step in the cell balance adjustment method and also correspond to the capacitor discharging process of the cell balance adjustment device 1.

Further, the sequence of the sets of steps, i.e., the steps S34 and S35, the steps S36 and S37, and the steps S38 and S39, is not limited to this sequence and may be any sequence. Similarly, the sequence of the steps S41, S42, and S43 is not limited to this sequence and may be any sequence.

The technique disclosed herein is not limited to the embodiments described above, and may encompass various other configurations. For example, the above-described embodiments deal with a case where each processing target group includes two or three cells. However, each processing target group may include four or more cells. The number of cells shared is also not limited to one, and two or more cells may be shared.

Further, the series of steps may be repeated continuously without stopping, while the battery is in use.

That is, in the first embodiment described above, the series of steps is repeated from the step S1, after the step S12. In the second embodiment described above, the series of steps is repeated from the step S31, after the step S40.

For example, if the pre-process charge states of the cells V1 to V3 of the first processing target group G1 in the second embodiment are V1: L (low), V2: H (high), and V3: M (medium), the voltages of these cells (V1, V2, V3) will transition as follows: (L, H, M) -> (M, H, L) -> (L, H, M) -> (M, H, L) -> (L, M, H) -> (H, L, M) -> (M, H, L) -> (L, M, H) . . .

Since a cell having a low voltage among the cells included in the processing target group is continuously charged, it is possible to achieve a very small voltage difference and maintain a highly accurate and stable cell balance.

### DESCRIPTION OF REFERENCE CHARACTERS

- 1: Cell Balance Adjustment Device
- 2: Cell
- 4: Processing Target Group
- 7: Switch
- 8: Capacitor
- 10: First Circuit
- 11: Cell Voltage Comparing Unit
- 12: Control Unit
- 20: Second Circuit
- 21: Second Cell Voltage Comparing Unit
- 22: Second Control Unit

## Claims

1. A cell balance adjustment method of equalizing charge states of a plurality of cells in a secondary battery configured by connecting the plurality of cells in series,
all of the cells forming the secondary battery being grouped into a plurality of processing target groups, each of the processing target groups including at least two or more of the cells arranged consecutively, each of the processing target groups sharing a part of the cells with an adjacent processing target group,
the method including: a capacitor charging step of connecting a capacitor to both end portions of the processing target group and charging the capacitor; and
a capacitor discharging step of connecting the capacitor to a predetermined processing target cell included in the processing target group and discharging an electric charge of the capacitor to charge the processing target cell.

2. The cell balance adjustment method of claim 1, wherein
the processing target cell is a low-voltage cell having a lowest voltage among the cells in the processing target group.

3. The cell balance adjustment method of claim 2, wherein
the processing target group includes two of the cells;
the capacitor charging step and the capacitor discharging step are repeated until a magnitude relationship between a voltage of one of the cells, which is a low-voltage side cell corresponding to the low-voltage cell, and a voltage of the other cell, which is a high-voltage side cell, is reversed.

4. The cell balance adjustment method of claim 1, wherein
the capacitor charging step and the capacitor discharging step are repeated until a difference in voltages of the cells included in each of the processing target groups is a predetermined value or less.

5. The cell balance adjustment method of claim 1, wherein
the capacitor charging step and the capacitor discharging step are continuously repeated while the secondary battery is in use.

6. The cell balance adjustment method of any one of claims 3 to 5, wherein
the capacitor charging step and the capacitor discharging step are repeated alternately at a cycle of 1 kHz or more and 1 MHz or less.

7. A cell balance adjustment device configured to equalize charge states of a plurality of cells in a secondary battery configured by connecting the plurality of cells in series,
all of the cells forming the secondary battery being grouped into a plurality of processing target groups, each of the processing target groups including at least two or more of the cells arranged consecutively, each of the processing target groups sharing a part of the cells with an adjacent processing target group,
the device including: a plurality of capacitors arranged for each of the processing target groups and connected to a positive electrode side and a negative electrode side of each of the cells via switches;
a cell voltage comparing unit capable of comparing voltages of the cells; and
a control unit configured to control each of the switches based on a detection value obtained from the cell voltage comparing unit,
the control unit is configured to execute
a capacitor charging process of connecting the capacitor to both end portions of each of the processing target groups and charging the capacitor, and
a capacitor discharging process of connecting the capacitor to a predetermined processing target cell included in each of the processing target groups and discharging an electric charge of the capacitor to charge the processing target cell.
